# EUROPEAN PATENT SPECIFICATION

(11) **EP 0 656 727 B1**
(45) Date of publication and mention of the grant of the patent: **28.04.1999**
(21) Application number: 93117836.2
(22) Date of filing: 03.11.1993
(51) Int. Cl.: H04N 7/087, H04N 5/445

(54) **Teletext receiver**
Videotextempfänger
Récepteur de télétexte

(43) Date of publication of application: 07.06.1995
(73) Proprietor: SONY-WEGA PRODUKTIONS GmbH, 70736 Fellbach (DE)
(72) Inventor: Bobert,Martin, Dipl.-Ing.(FH), D-71332 Waiblingen (DE)
(74) Representative: Müller, Frithjof E., Dipl.-Ing.

(56) References cited:
- EP-A- 0 304 129
- EP-A- 0 394 862
- EP-A- 0 489 387
- EP-A- 0 561 028
- WO-A-91/19384
- US-A- 5 023 721

## Description

The invention concerns a teletext receiver in accordance with the precharacterizing parts of independent claims 1 and 2. A teletext receiver of that kind is known from EP-A 0 561 028.

In a conventional teletext receiver like a television receiver, a teletext picture can be displayed on a screen selectively as the teletext picture only or the teletext picture superimposed in or on a normal video picture. In both cases, the normal video picture can not be seen at all or sufficiently when the teletext picture is displayed.

In another conventional television receiver, the normal video picture is displayed as a main picture on a full screen and the teletext picture is displayed as a picture in picture (hereinafter PIP) on a small window provided in the main picture or vice versa as disclosed in JP-A-1 296 878, JP-A-1 296 879, JP-A-2 228 186 and European Patent EP-A-0 489 387, US-A-5,023,721 and US-A-5,128,766. If the teletext picture is displayed as a PIP, it is difficult to read the text of the teletext picture due to the small size of the PIP. On the contrary, if the teletext picture is displayed as a main picture, a part of the teletext picture is covered by the normal video picture and some important information may be missing.

It is also known from JP-A-57-206178, JP-A-61-105190, JP-A-61-193580 and JP-A-1-276977 to split the screen vertically or horizontally into two areas displaying the normal video picture and the teletext picture by controlling the deflection system. However, the circuit construction to realize such display configuration is complicated.

EP-A-0 561 028 corresponding to the precharacterizing parts of independent claims 1 and 2 provides a method for simultaneously displaying two pages of teletext by adjusting the width of the text page by means of changing the pixel frequency of teletext decoder arranged within the television receiver or within a video recorder connected thereto. By this method, one of the displayed pages of teletext can be an index page received with the teletext program or a list of selectable pages which is determined by a processor in the television receiver or in a video recorder connected to this receiver. In addition, both displayed text pages may also be pages of teletext. However, EP-A-0 561 028 does not disclose a page-shift-function whereby, if the selection of the page number is confirmed, the teletext page of the selected page number is displayed on the one half of the screen and the following teletext page is displayed on the other half of the screen.

EP-A-0 489 387 describes a teletext receiver which is adapted to simultaneously show a second chosen teletext page different from a first chosen teletext page. Further, this known teletext receiver includes a device of the type to show the second page with reduced dimensions in the place of a part of the first page. Further, the known teletext receiver can display a teletext page together with the reduced television image of a second channel within the teletext page using picture in picture procedure.

For teletext transmission, normally the teletext data representing more than one page of teletext are transmitted during the vertical blanking periods in a television channel. Therefore, in a conventional teletext receiver, it is possible to store such teletext data for more than one page of teletext in a teletext memory by assigning desired pages and to display more than one teletext picture on the screen at the same time by dividing the screen into more than one area as disclosed in JP-A-61-105190, JP-A-1-296878 and JP-A-1-296879. However, if the display area of the screen is split in four, the size of each picture becomes too small to read.

The object of the invention is the provision of teletext receivers which possess new functions compared to the prior art as discussed above.

According to a first aspect of the invention the object is solved by a teletext receiver comprising:
- a television signal input circuit for receiving a television signal including a teletext data signal;
- display means having a screen for displaying a teletext picture;
- teletext signal processor means for decoding the teletext data signal and obtaining teletext data; and
- teletext memory means for storing the obtained teletext data; wherein
- said teletext signal processor means reads out teletext data including two teletext pages from the teletext memory means at a higher speed than the speed for displaying a teletext picture of one page on the full size of that screen,
- said display means are displaying one of the two teletext pages on one half of the screen and the other of the two teletext pages on the other half of the screen; and
- if the one of the two teletext pages indicates one or more page numbers of teletext and if any of the indicated page numbers is selected, a teletext page of the selected page number is displayed on the other half of the screen,
characterized in that if the selection of the page number is confirmed, the teletext page of the selected page number is displayed on the one half of the screen and a following teletext page is displayed on the other half of the screen.

According to a second aspect the invention is embodied by a teletext receiver comprising:
- a television signal input circuit for receiving a television signal including a teletext data signal;
- display means having a screen for displaying a teletext picture;
- teletext signal processor means for decoding the teletext data signal and obtaining teletext data, and
- teletext memory means for storing the obtained teletext data; wherein
- said teletext signal processor means reads out teletext data from said teletext memory means at a higher speed than the speed for displaying teletext picture of one page on the full size of that screen and
- said display means display the teletext picture on one half of the screen,
characterized by picture-in-picture processor means for generating a video signal representing a video picture in smaller size than half of the screen size, and switching means associated with the input of said display means so as to enable these display means to display the video picture in the small size on the other half of the screen.

One way of carrying out the invention is described in detail below with reference to drawings which illustrate only one specific embodiment in which:
**Fig. 1** is a schematic block diagram showing a television apparatus as an example of a teletext receiver in accordance with the invention;
**Fig. 2** is a schematic plane view of a remote commander employed for controlling the television apparatus shown in Fig. 1;
**Figs. 3A, 3B, 3C and 3D** are schematic diagrams explaining a dual page mode and a combination of the dual pagemode and a page catching mode in an embodiment of a teletext receiver in accordance with the invention;
**Fig. 4** is a flow chart for explaining page acquisition for the page catching mode in an embodiment of a teletext receiver in accordance with the invention;
**Fig. 5** is a flow chart explaining the combination of the dual page mode and the page catching mode as shown in Figs. 3A to 3D;
**Figs. 6A, 6B and 6C** are schematic diagrams showing PIP mode with teletext in an embodiment of a teletext receiver in accordance with the invention; and
**Figs. 7a and 7B** are flow charts explaining the PIP mode as shown in Figs. 6A to 6C.

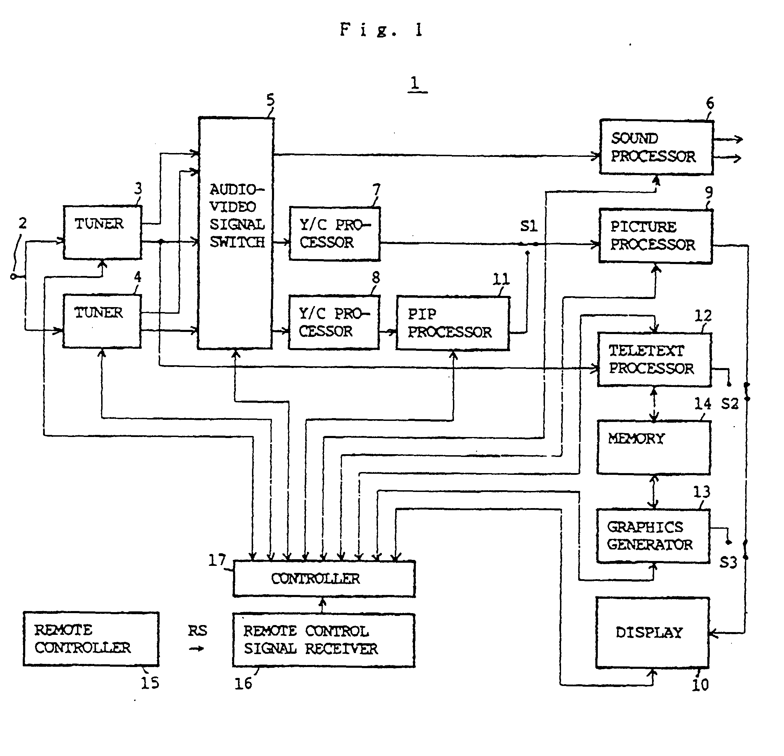

Referring to Fig. 1, the construction of the television receiver (hereinafter, TV receiver) 1 is now explained. The TV receiver 1 has an antenna input 2, which is connected to one or more tuners 3 and 4 each including a video IF signal demodulator and an audio signal demodulator so that one or more composite video signals and audio signals are obtained, respectively. The two tuners 3 and 4 are connected to the audio and video switcher (hereinafter, AV switcher) 5 which supplies the following circuits with one or more selected composite video signals and audio signals. Although not illustrated, auxiliary audio and video signal input (hereinafter, AV input) and auxiliary audio and video output (hereinafter, AV output) may be provided for selection by the AV switcher 5.

One or more audio signals selected by the AV switcher 5 are supplied to a sound signal processor 6 in which the audio signals are subjected to a desired volume, tone an balance controls and so on and selectively supplied to built-in speakers or headphones through power amplifiers (not illustrated).

One or more composite video signal(s) selected by the AV switcher 5 is (are) supplied to the respective luminance and chrominance signal processors (hereinafter, Y/C processor) 7 and 8 in which the respective composite video signals are converted to respective luminance and color difference signals (for each, hereinafter, Y/U/V signal). A composite video signal which is selected by the AV switcher 5 to be displayed as the main-picture in the normal mode or in the PIP mode is supplied through the Y/C processor 7 and a fast switch S1 to a picture processor 9 in which the Y/U/V signals are subjected to desired adjustments of picture quality such as sharpness, picture contrast, brightness, color intensity and hue in case of a NTSC system and from which the video picture signal in the RGB form is supplied through fast switches S2 and S3 to the display apparatus 10.

If the PIP mode is selected, a composite video signal selected by the AV switcher 5 to be displayed as the sub-picture in the PIP mode is supplied through the Y/ C processor 8 to the PIP processor 11 in which the video signal is compressed in size to form the sub-picture. The main picture signal and the compressed sub-picture signal are selectively supplied though the fast switches S1 under control of a blanking signal accompanying the sub-picture signal to the picture signal processor 9.

The composite video signal selected for the main picture by the AV switcher 5 is also supplied to the teletext processor 12 in which the teletext data signal transmitted during every vertical period of the television signal is extracted and the teletext picture signal in the RGB form is formed according to the extracted teletext data and selectively supplied through the fast switch S2 under control of a blanking signal accompanying the teletext picture signal and through the fast switch S3 to the display apparatus 10.

In case that the TV receiver 1 has a function of On Screen Display (hereinafter, OSD) which provides the user with easy control, a graphics generator 13 is provided to generate the OSD picture signal in RGB form for displaying and use for control of the functions of the TV receiver 1. The OSD picture signal is selectively supplied through the fast switch S3 under control of a blanking signal accompanying the OSD picture signal to the display apparatus 10.

The blanking signals accompanying the respective picture signals control the fast switches S1, S2 and S3 according to the contents of the pictures so that the main video picture is displayed as a background, and the sub-picture in the PIP mode, the teletext picture and the OSD picture are overlayed in this order, in general.

A memory 14 is also provided to store the teletext data and OSD data, if necessary. The teletext processor 12, graphics generator 13 and memory 14, however, may be constructed as an integrated circuit. Furthermore, as a variation, the teletext picture and OSD picture can be produced in the same layer. In this case, the teletext processor 12 is used also as the graphics generator 13 and the fast switch S3 can be omitted.

The TV receiver 1 may be provided with the remote controller 15 for controll by manipulation thereof. Therefore, the TV receiver 1 has a remote control signal receiver 16 for receiving control signals RS from the remote controller 15 which are decoded and supplied to a controller 17 for generally controlling the TV receiver 1. The controller may be constructed by a micro processor.

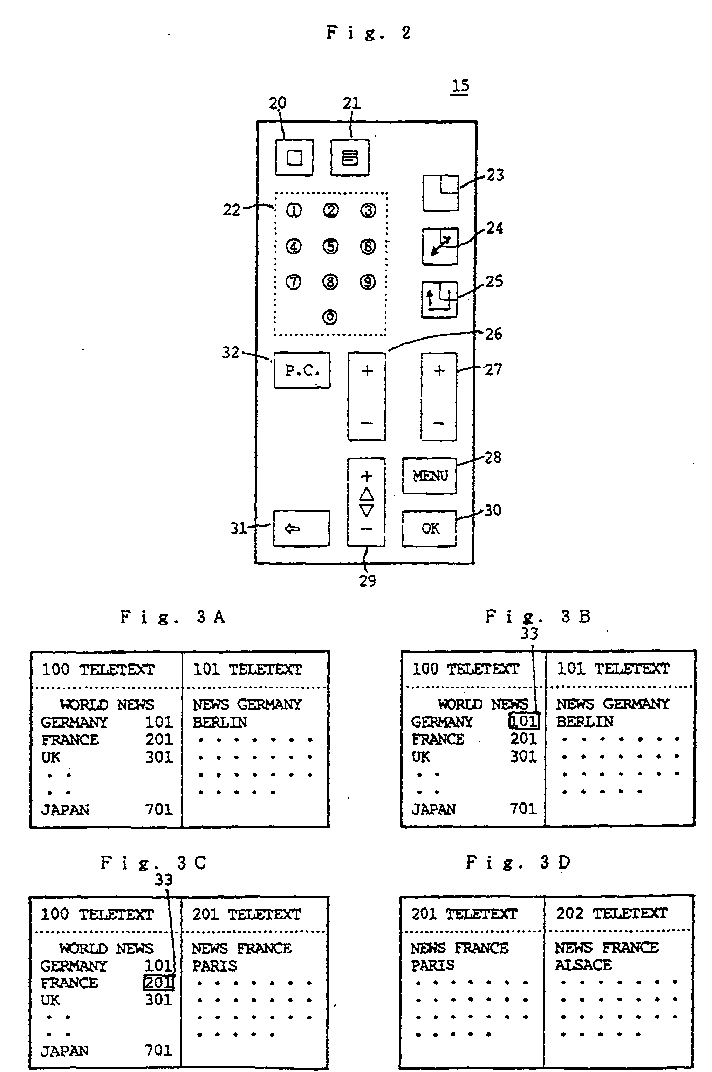

The remote controller 15 has, among others, as shown in Fig. 2, a TV power ON key 20, a teletext ON key 21, number keys 22, PIP mode selection keys 23, 24 and 25, a program up/down key 26, a volume control key 27, a menu ON key 28, a cursor up/down key 29, a OK key 30, a return key 31 and a page catching mode key (indicated as P.C.) 32. Instead of the page catching key 32, the OK key 30 can be used to select the page catching mode. In this case, the page catching mode key 32 can be omitted. The remote controller 15 may have other function keys which are not directly related to the invention and therefore the illustration and explanation of which will be omitted.

If the TV receiver 1 is in the condition of stand-by, the power is turned on when the TV power ON key 20 is depressed and a picture of the program which has been seen before the TV receiver 1 was turned off is displayed on the screen of the display apparatus 10. A desired program can be selected by depressing one of the number keys 22 or the program up / down key 26. If the menu ON key 28 is depressed, a menu accompanied by a cursor is displayed on the screen as OSD overlapped on the main picture and the operation of the cursor up/down key 29 causes movement of the cursor in the menu. The OK key 30 is used for selection of a desired single item pointed to by the cursor. The selection of the item may cause actual control of the TV receiver 1 or a display of another menu. The return key 31 is used for a one-step back display of such menu layer, the location of the cursor or the like.

If the PIP mode is selected by depressing the PIP mode selection key 23, a sub-picture is displayed as overlapped on the main picture. By depressing the PIP mode selection key 24, the main picture and a sub-picture can be exchanged. By depressing the PIP mode selection key 25, the display position of the sub-picture can be shifted clock-wise. The program to be displayed as the sub-picture can be selected on a predetermined menu.

If the teletext key 21 is depressed during displaying the main video picture transmitted in the selected program, the teletext mode is selected and the teletext picture corresponding to the teletext data transmitted in the selected program is displayed instead of displaying the main video picture. If the teletext key 21 is depressed again, the superimposed teletext picture can be displayed together with the main video picture. In the teletext mode, any desired page of the teletext can be selected by entering the page number with the number keys 22. Increment or decrement of a page number can be also performed by manipulating the program up/down key 26. After a teletext picture is displayed, teletext data of, for example, around 100 pages in total preceding and succeeding the presently displayed teletext page may be stored in the teletext memory 14. Accordingly, if another page of which teletext data are stored in the teletext memory 14 is selected, the selected page can be displayed quickly.

Besides, the TV apparatus 1 is provided with a well-known so-called page catching function for easy teletext operation, in which - if the page catching key 32 is depressed during the teletext mode - the page catching mode is selected and a cursor appears on the teletext picture presently displayed and is located on the first or top one of the page numbers indicated in the teletext picture as far as the teletext picture includes one or more page numbers like an index page. The cursor can be moved upwardly or downwardly by manipulating the cursor up/down key 29 to stop at each page number sequentially which is found in accordance with the rules described below. If the OK key 30 is depressed when the cursor is located at the desired page number, the teletext picture of the desired page number is then displayed.

Page numbers can be detected on the basis of e.g. a rule that the page number always consists of three digits and the first digit is one of 1 to 8 and not 0 or 9. While such three digits do sometimes not represent a page number, the user can easily recognize that and skip the cursor to the next three digits. Nevertheless, in order to avoid such confusion, it may be additionally defined as a rule that three digits should be located at the beginning of the lines or are to be followed or preceded by any symbols or characters like ".", "-", "/",(",")", "p", "S" and so on, possibly with a space. Teletext data of respective pages are transmitted cyclically every respective predetermined time period. Therefore, all page numbers of the teletext transmitted in the selected program can be detected in the maximum time period. If any of the three digits detected in accordance with the above rules are not found in the detected page numbers, that three digits can be ignored.

As more details will be described below, teletext data corresponding to all of the pages which numbers are indicated in the presently displayed teletext picture are automatically acquired by adopting the above described rules and stored in the teletext memory 14 in addition to the transaction for acquisition of teletext data of around 100 pages as described above. This transaction may be performed always if the teletext picture is displayed whether or not the page catching mode is selected, so that the selected page in the page catching mode can be displayed quickly.

If the menu ON key 28 is depressed during the teletext mode, a teletext menu regarding teletext operation is displayed as overlapped with the presently displayed teletext picture and several features for teletext display such as index, selection of enlarged upper half/enlarged lower half/normal size full page display, subtitle and so on can be selected by manipulating the cursor up/down key 29 and subsequently depressing the OK key 30.

According to the embodiment of the invention, dual page mode is provided. If the dual page mode is selected on the teletext menu during the teletext mode, the consecutive two pages of the teletext pictures can be displayed simultaneously on the screen compressed in horizontal or vertical direction as shown in Fig. 3A. Desired consecutive two pages of teletext pictures can be selected in the same manner as described above. To realize the dual page mode, the teletext data should be read from the teletext memory 14 with the double of the speed as in the case of a full size teletext picture.

In this embodiment, the dual page mode can be combined with the page catching mode as described above. At the outset, all teletext data corresponding to the pages which numbers are indicated in the teletext picture displayed, for example, on the left hand side on the screen, is acquired automatically and stored in the teletext memory 14 in the same manner as described above whether or not the page catching mode is selected.

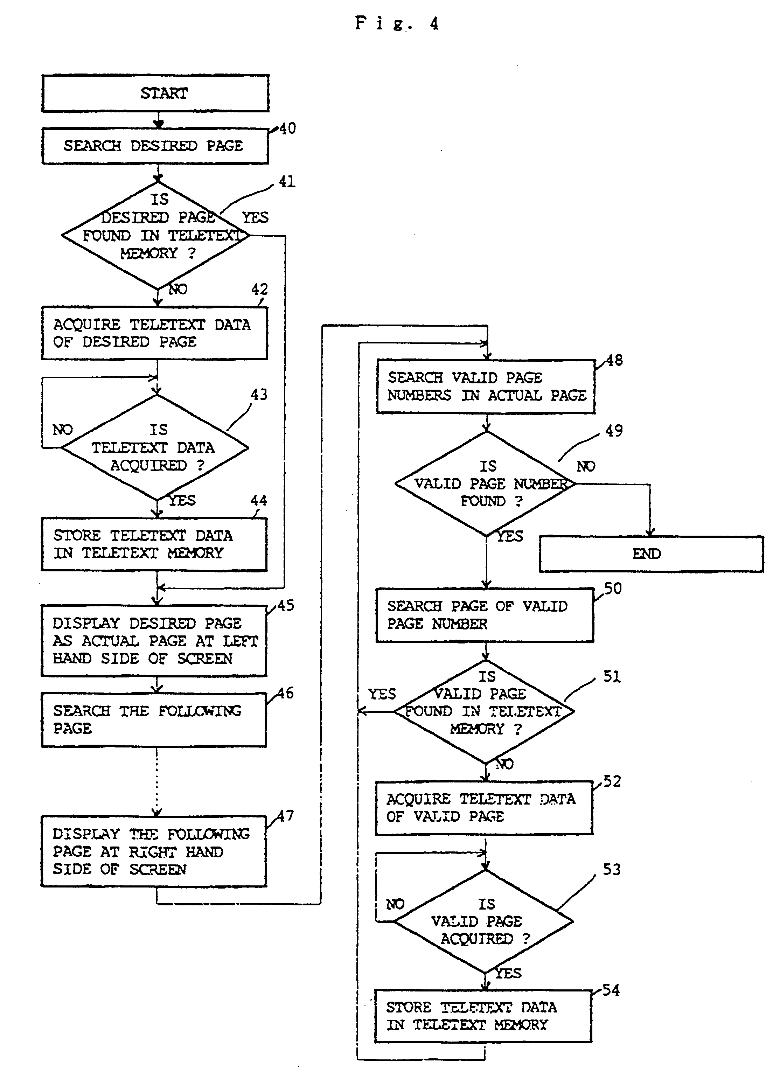

Referring to Fig. 4, the transaction of the dual page mode and acquisition of teletext data used in the page catching mode will be explained in detail. In the dual page mode, if the user selects a desired teletext page by the number keys 22 or the program up/down key 26, the desired page is searched whether the teletext data of the desired page has been stored already in the teletext memory 14 in step 40. If the desired page is not found in the teletext memory 14 in step 41, then the teletext data of the desired page is acquired from the teletext data signal transmitted in the selected program in step 42. If the teletext data of the desired page is acquired in step 43, the teletext data is stored in the teletext memory 14 in step 44 and the teletext picture of the desired page is displayed, for example, on the left hand side of the screen as hereinafter called "actual page" in step 45.

Subsequently, the page following the desired page is searched in step 46. After procedures similar to steps 41 to 44 are taken with regard to the following page, the teletext picture of the following page is displayed on the right hand side of the screen in step 47. If the page following the desired page is not found during these procedures, the most nearest subsequenct page is searched and displayed.

If the teletext picture of the actual page is displayed, the valid page numbers are searched from the text of the acual page in step 48. If the first valid page number is found in step 49, it is searched in step 50 whether the teletext data of the first valid page is stored in the teletext memory 14. If it is found in step 51 that the teletext data is not stored in the teletext memory 14, the teletext data of the valid page is acquired from the teletext data signal transmitted in the selected program in step 52. If the teletext data of the valid page is acquired in step 53, the teletext data is stored in the teletext memory 14 in step 54. The following valid page numbers are searched and its corresponding teletext data is stored in the memory 14 sequentially in the same manner as in steps 48 to 54 until no further page number is found.

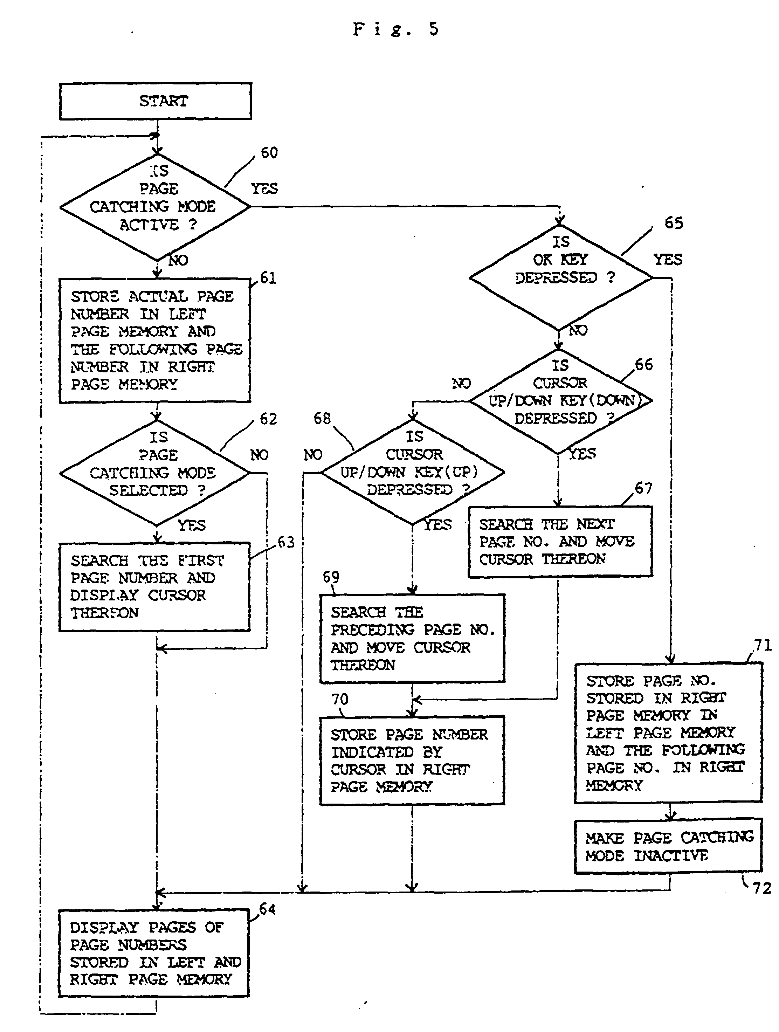

Referring to Figs. 3A to 3D and Fig. 5, operation in combination of the dual page mode and the page catching mode will be explained. In the teletext memory 14, two memory areas are assigned for left page numbers and right page numbers. If it is judged in step 60 that the page catching mode is not active presently, the page number of the actual page is stored in the memory area for the left page numbers and the page number following the page number of the actual page is stored in the memory area for right page numbers in step 61. If it is judged in step 62 that the page catching mode is not selected, the teletext pictures of the actual page and the following page are displayed on the left hand side and the right hand side of the screen, respectively, in step 64, as explained in the above and as shown in Fig. 3A.

If it is judged in step 62 that the page catching mode is selected by depressing the page catching key 32 or the OK key 30, the page catching function becomes active and the first valid page number indicated in the teletext picture displayed as the actual page at the left hand side of the screen is searched in a similar sequence as explained above and shown in Fig. 4. If the first valid page number is found, a cursor 33 appears in step 63 and is located on the first valid page number as shown in Fig. 3B.

If the cursor up/down key 29 is manipulated to move the cursor 33 downward in step 66, the next valid page number is searched and the cursor 33 is moved to the next valid page number in step 67. Similarly, if the cursor up/down key 29 is manipulated to move the cursor 33 upward in step 68, the preceding valid page number is searched and the cursor 33 is moved to the preceeding valid page number in step 69. Since these valid page numbers have been searched once in the previous procedure as shown in Fig. 4, if the locations of these valid page numbers in the actual page have been stored, it is not always necessary to search them again.

If the cursor 33 is located on any valid page number, this valid page number is stored in the memory area for right page numbers in step 70 and the teletext data of this valid page number is read from the teletext memory 14 so that the teletext picture of this page is displayed on the right hand side of the screen as shown in Figs. 3B or 3C. Therefore, the user can preview the teletext picture to check whether this page is really the desired one.

If it is confirmed by depressing the OK key 30 in step 65 that the teletext picture displayed in the right hand side of the screen is the desired one, this page number is stored in the memory area for the left page numbers and the following page number is stored in the memory area for the right page numbers in step 71. The page catching mode is made inactive in step 72. Subsequently, the teletext data of those two page numbers are read from the teletext memory 14 so that the teletext pictures of these two pages are displayed in step 64 as shown in Figs. 3D.

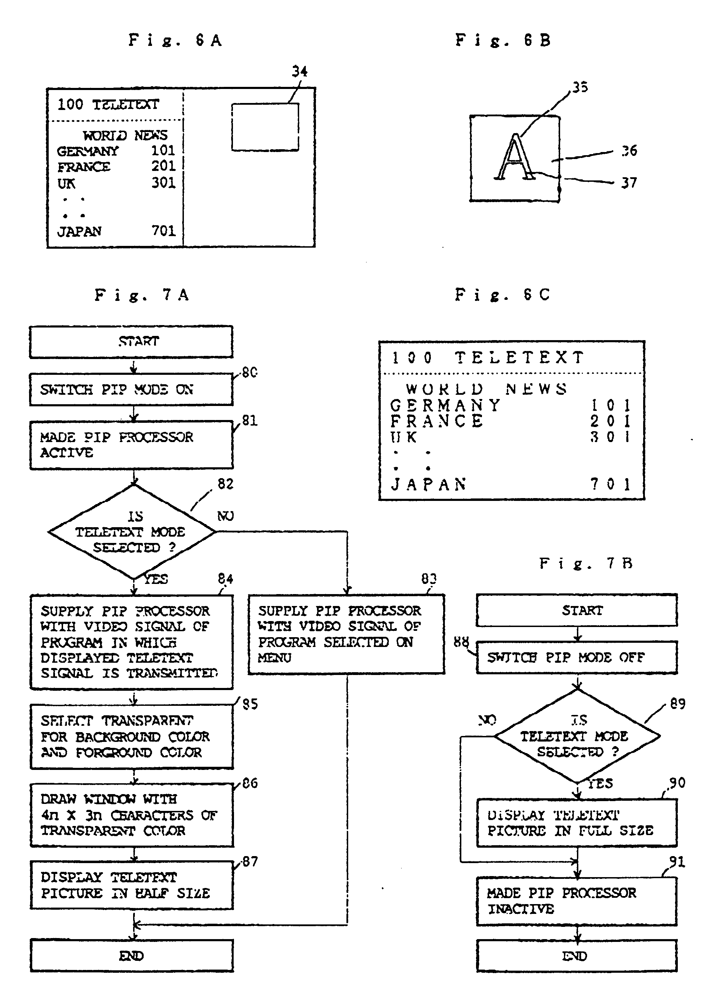

Referring to Figs. 6A, 6B and 6C and Figs. 7A and 7B, the PIP mode with teletext is now explained. If the PIP mode selection key 23 is depressed in step 80 of Fig. 7A, the PIP processor 11 is made active in step 82 and the video signal of the program selected for a sub-picture by means of the menu is supplied through the AV switcher 5 to the PIP processor 11 so that the sub-picture is displayed together with the main picture also selected by the AV switcher 5 on the screen in step 83.

However, if the teletext mode is selected, the sub-picture can not be seen sufficiently because the teletext picture has priority over the sub-picture of PIP. Therefore, in this embodiment, while the teletext data is read from the teletext memory 14 at double speed as in case of a full size teletext picture during scanning, for example, the left hand side of the screen on which the teletext picture is displayed in horizontally halt size of the full screen, the blanking signal is derived during scanning, for example, for the remaining right hand side of the screen to produce a blank picture, in which a window 34 is produced to recover the sub-picture so that the sub-picture is displayed in the remaining half of the screen as shown in Fig. 6A. Similar consideration apply mutatis mutandis in respect to a vertically half size displaying.

One solution to make such a window 34 is to generate in the teletext processor 12 and to write 4n x 3n characters (in case of a 4:3 aspect ratio whereby n is related to the magnification of the sub-picture) with transparent color at the location corresponding to where the sub-picture is to be displayed in the teletext picture layer or also in the OSD picture layer, if the OSD picture layer is separately displayed. More precisely, each character 35 is surrounded by a rectangular, so-called background 36 as shown in Fig. 6B and the transparent color is selected to paint both of the background 36 and the inside of the character, i.e., a so-called foreground 37. Although character "A" is shown in Fig. 6B as an example, any character or symbol can be used, of course, and if just space is assigned for such respective characters, only the background color is important.

Accordingly, if it is judged in step 82 that the teletext mode has been selected before the PIP mode is selected, the video signal transmitted in the program in which the teletext to be displayed is also transmitted is supplied to the PIP processor 11 in step 84 in order to avoid a misunderstanding, though it is a matter of choice. In step 85, the transparent color is selected for both of the background and the foreground of the characters to be written and the window is formed of 4n x 3n characters in transparent color in step 86. Subsequently, the teletext picture is displayed at the left hand side in half size in step 87.

If the PIP mode is made inactive by depressing the PIP mode selection key 23 again, in step 88, the PIP processor 11 is made inactive in step 91 whether or not the teletext mode is selected. If it is judged in step 89 that the teletext mode has been selected, the teletext picture displayed at the left hand side in half size is displayed in full size of the screen as shown in Fig. 6C by reading out from the memory 14 at normal speed in step 90.

## Claims

1. A teletext receiver comprising:
- a television signal input circuit (2, 3, 4) for receiving a television signal including a teletext data signal;
- display means (10) having a screen for displaying a teletext picture;
- teletext signal processor means (12) for decoding the teletext data signal and obtaining teletext data; and
- teletext memory means (14) for storing the obtained teletext data; werein
- said teletext signal processor means (12) reads out teletext data including two teletext pages from the teletext memory means (14) at a higher speed than the speed for displaying a teletext picture of one page on the full size of that screen,
- said display means (10) are displaying one of the two teletext pages on one half of the screen and the other of the two teletext pages on the other half of the screen; and
- if the one of the two teletext pages indicates one or more page numbers of teletext and if any of the indicated page numbers is selected, a teletext page of the selected page number is displayed on the other half of the screen,
characterized in that if the selection of the page number is confirmed, the teletext page of the selected page number is displayed on the one half of the screen and a following teletext page is displayed on the other half of the screen.

2. A teletext receiver comprising:
- a television signal input circuit (2, 3, 4) for receiving a television signal including a teletext data signal;
- display means (10) having a screen for displaying a teletext picture;
- teletext signal processor means (12) for decoding the teletext data signal and obtaining teletext data, and
- teletext memory means (14) for storing the obtained teletext data; werein
- said teletext signal processor means (12) reads out teletext data from said teletext memory means (14) at a higher speed than the speed for displaying teletext picture of one page on the full size of that screen and
- said display means (10) display the teletext picture on one half of the screen,
characterized by picture-in-picture processor means (11) for generating a video signal representing a video picture in smaller size than half of the screen size, and switching means (S2 in Fig. 1) associated with the input of said display means (10) so as to enable these display means to display the video picture in the small size on the other half of the screen.

## Patentansprüche

1. Videotextempfänger mit:
- einer Fernsehsignal-Eingangsschaltung (2, 3, 4) zum Empfangen eines Fernsehsignals, das ein Videotext-Datensignal enthält;
- einer Anzeigeeinrichtung (10) mit einem Schirm zum Darstellen eines Videotextbilds;
- einer Videotextsignal-Prozessoreinrichtung (12) zum Decodieren des Videotext-Datensignals und zum Erhalten von Videotextdaten; und
- einer Videotext-Speichereinrichtung (14) zum Speichern der erhaltenen Videotextdaten;
wobei
- die Videotextsignal-Prozessoreinrichtung (12) Videotextdaten für zwei Videotextseiten mit einer Geschwindigkeit aus der Videotext-Speichereinrichtung (14) ausliest, die größer als die Geschwindigkeit zum Darstellen eines Videotextbilds einer Seite auf dem vollen Schirm ist;
- die Anzeigeeinrichtung (10) eine der zwei Videotextseiten in einer Hälfte des Schirms und die andere der zwei Videotextseiten in der anderen Hälfte des Schirms darstellt; und
- dann, wenn eine der zwei Videotextseiten eine oder mehrere Seitennummern für Videotext anzeigt und eine der angezeigten Seitennummern ausgedrückt wird, die Videotextseite mit der ausgewählten Seitennummer in der anderen Hälfte des Schirms dargestellt wird;
**dadurch gekennzeichnet, dass** dann, wenn die Auswahl der Seitennummer bestätigt wird, die Videotextseite mit der ausgewählten Seitennummer in der einen Hälfte des Schirms dargestellt wird und die folgende Videotextseite in der anderen Hälfte des Schirms dargestellt wird.

2. Videotextempfänger mit:
- einer Fernsehsignal-Eingangsschaltung (2, 3, 4) zum Empfangen eines Fernsehsignals, das ein Videotext-Datensignal enthält;
- einer Anzeigeeinrichtung (10) mit einem Schirm zum Darstellen eines Videotextbilds;
- einer Videotextsignal-Prozessoreinrichtung (12) zum Decodieren des Videotext-Datensignals und zum Erhalten von Videotextdaten; und
- einer Videotext-Speichereinrichtung (14) zum Speichern der erhaltenen Videotextdaten;
wobei
- die Videotextsignal-Prozessoreinrichtung (12) Videotextdaten mit einer Geschwindigkeit aus der Videotext-Speichereinrichtung (14) ausliest, die höher als die Geschwindigkeit zum Anzeigen des Videotextbilds einer Seite auf dem vollen Schirm ist; und
- die Anzeigeeinrichtung (10) das Videotextbild in einer Hälfte des Schirms darstellt;
**gekennzeichnet durch** eine Bild-in-Bild-Prozessoreinrichtung (11) zum Erzeugen eines Videosignals, das ein Videobild mit kleinerer Größe als der Hälfte der Schirmgröße repräsentiert, und eine Umschalteinrichtung (S2 in Fig. 1), die dem Eingang der Anzeigeeinrichtung (10) zugeordnet ist, um diese Anzeigeeinrichtung dazu zu befähigen, das Videobild mit der kleinen Größe in der anderen Hälfte des Schirms darzustellen.

## Revendications

1. Récepteur de vidéotex diffusé, comprenant :
- un circuit (2, 3, 4) d'entrée de signal de télévision destiné à recevoir un signal de télévision contenant un signal de données de vidéotex diffusé,
- un dispositif d'affichage (10) ayant un écran d'affichage d'une image de vidéotex diffusé,
- un dispositif processeur (12) de traitement du signal de vidéotex diffusé pour le décodage du signal de données de vidéotex diffusé et l'obtention des données de vidéotex diffusé, et
- un dispositif (14) à mémoire de vidéotex diffusé destiné à conserver les données obtenues de vidéotex diffusé, dans lequel
- le dispositif processeur (12) de signal de vidéotex diffusé lit les données de vidéotex diffusé comprenant deux pages de vidéotex diffusé dans le dispositif (14) de mémoire à une vitesse supérieure à la vitesse d'affichage de l'image de vidéotex diffusé d'une page de dimension normale de l'écran,
- le dispositif d'affichage (10) affiche l'une des deux pages de vidéotex diffusé sur la moitié de l'écran et l'autre des deux pages de vidéotex diffusé sur l'autre moitié de l'écran, et
- si l'une des deux pages de vidéotex diffusé indique un ou plusieurs numéros de pages de vidéotex diffusé et si l'un quelconque des numéros de pages indiqués est sélectionné, une page de vidéotex diffusé correspondant au numéro de page choisi est affichée sur l'autre moitié de l'écran,
caractérisé en ce que, si la sélection du numéro de page est confirmée, la page de vidéotex diffusé de numéro de page choisi est affichée sur la première moitié de l'écran et une page suivante de vidéotex diffusé est affichée sur l'autre moitié de l'écran.

2. Récepteur de vidéotex diffusé, comprenant :
- un circuit (2, 3, 4) d'entrée de signal de télévision destiné à recevoir un signal de télévision contenant un signal de données de vidéotex diffusé,
- un dispositif d'affichage (10) ayant un écran d'affichage d'une image de vidéotex diffusé,
- un dispositif processeur (12) de traitement du signal de vidéotex diffusé pour le décodage du signal de données de vidéotex diffusé et l'obtention des données de vidéotex diffusé, et
- un dispositif (14) à mémoire de vidéotex diffusé destiné à conserver les données obtenues de vidéotex diffusé, dans lequel
- le dispositif processeur (12) de signal de vidéotex diffusé lit les données de vidéotex diffusé dans le dispositif (14) de mémoire à une vitesse supérieure à la vitesse d'affichage de l'image de vidéotex diffusé d'une page de dimension normale de l'écran, et
- le dispositif (10) d'affichage affiche l'image de vidéotex diffusé sur la moitié de l'écran,
caractérisé par un dispositif processeur (11) d'image dans une image, destiné à créer un signal vidéo représentant une image vidéo avec une dimension inférieure à la moitié de la dimension de l'écran, et un dispositif de commutation (S2 de la figure 1) associé à l'entrée du dispositif d'affichage (10) pour permettre au dispositif d'affichage d'afficher l'image vidéo en petite dimension sur l'autre moitié de l'écran.
